# EUROPÄISCHE PATENTSCHRIFT

(11) **EP 0 705 745 B1**
(45) Veröffentlichungstag und Bekanntmachung des Hinweises auf die Patenterteilung: **04.11.1998**
(21) Anmeldenummer: 95109797.1
(22) Anmeldetag: 23.06.1995
(51) Int. Cl.: B60S 1/08

(54) **Optoelektronische Sensoreinrichtung zur Erfassung des Benetzungsgrades einer transparenten Kraftfahrzeugscheibe mit Niederschlag**
Optoelectronic sensor for measuring the amount of moisture on the transparentwindscreen of a motor vehicle.
Dispositif détecteur optoélectronique pour déterminer l'humidité sur la surface d'un pare-brise transparent de véhicule automobile.

(30) Priorität: 12.07.1994 DE 4424454
(43) Veröffentlichungstag der Anmeldung: 10.04.1996
(73) Patentinhaber: Leopold Kostal GmbH & Co. KG, 58507 Lüdenscheid (DE)
(72) Erfinder: Bendicks, Norbert, D-58675 Hemer (DE); Esders, Berthold, D-58579 Schalksmühle (DE)

(56) Entgegenhaltungen:
- EP-A- 0 299 606
- DE-C- 4 006 174
- US-A- 4 867 561
- US-A- 4 920 257
- US-A- 4 960 996

## Beschreibung

Die Erfindung betrifft eine optoelektronische Sensoreinrichtung zur Erfassung des Benetzungsgrades einer transparenten Kraftfahrzeugscheibe mit Niederschlag, wobei ein zwei parallele Grenzflächen und zwei einander gegenüberstehende entgegengesetzt geneigte Koppelflächen aufweisender Optikkörper vorhanden ist, dessen eine Grenzfläche optisch mit der Kraftfahrzeugscheibe gekoppelt ist und dessen Eintrittskoppelfläche mit einem optischen Sender und dessen Austrittskoppelfläche mit einem optischen Empfänger gekoppelt ist.

Eine derartige Sensoreinrichtung ist aus der DE-PS 33 14 770 C2 bekannt. Diese Einrichtung nutzt die Änderung des Winkels der Totalreflexion in Abhängigkeit von der Benetzung der Kraftfahrzeugscheibe aus. Da die Empfindlichkeitskurve des Empfängers von derjenigen des Senders abweicht, macht sich störende Strahlung stark bemerkbar. Dieses gilt besonders für den Bereich der sichtbaren Wellenlängen.

Aufgabe der Erfindung ist die möglichste Einschränkung des Austrittsbündels auf den Arbeitsbereich des Senders.

Diese Aufgabe wird nach der Erfindung dadurch gelöst, daß in dem Strahlengang mindestens zwei Filter angeordnet sind, deren Durchlaßbereiche in einem schmalen Frequenzband einen Überlappungsbereich haben.

Die Erfindung unterscheidet sich insofern vom Stand der Technik, als das Empfangslichtbündel gerade auf den Arbeitsbereich abgestimmt wird. Damit erreicht man im Arbeitsbereich eine hohe Empfindlichkeit bei herabgesetzten Störeinflüssen.

Eine besonders gute Abstimmung auf den Arbeitsbereich erhält man dadurch, daß der Überlappungsbereich mit dem Arbeitsbereich des optischen Senders übereinstimmt.

Störeinflüsse sind besonders gering, wenn der Arbeitsbereich im Spektralbereich von 650 - 750 µm liegt.

Eine besonders günstige Abschirmung von Störstrahlung ergibt sich dadurch, daß ein Filter als Interferenzfilter ausgebildet ist, dessen Durchlaßbereich im wesentlichen mit dem Arbeitsbereich übereinstimmt.

Mit einem Bandpaßfilter lassen sich dadurch gute Ergebnisse erzielen, daß mindestens ein Filter als Bandpaßfilter ausgebildet ist, dessen Durchlaßband den Arbeitsbereich einschließt und mit einer Bandkante unmittelbar in Nachbarschaft des Arbeitsbereichs liegt.

Eine gute Ausblendung mit Bandpaßfiltern ergibt sich dadurch, daß beide Filter als Bandpaßfilter ausgebildet sind, deren Durchlaßbereiche des sichtbaren Spektrums einerseits an den Arbeitsbereich im langwelligen Bereich und andererseits an den Arbeitsbereich im kurzwelligen Bereich anschließen.

Ein wirkungsvoller und wirtschaftlicher Aufbau wird dadurch erzielt, daß das eine Filter durch den Optikkörper realisiert ist.

Die Eigenschaften des Optikkörpers lassen sich dadurch in weitem Umfang beeinflussen, daß der als Filter dienende Optikkörper eine Mischung von Glasmaterialien unterschiedlicher Eigenschaften ist.

Eine andere wirkungsvolle Möglichkeit wird dadurch erzielt, daß ein Filter durch eine dielektrische Schicht realisiert ist, die auf den Optikkörper durch einen Sputterprozeß aufgebracht ist.

Eine weitere Möglichkeit der Beeinflussung liegt darin, daß ein Filter durch die zwischen dem Optikkörper und der Kraftahrzeugscheibe befindliche Klebeschicht realisiert ist.

Eine weitere Möglichkeit der Beeinflussung wird dadurch verwirklicht, daß ein Filter durch ein dem optischen Empfänger zugeordnetes, am Halter des Empfängers vorhandenes Zusatzelement realisiert ist.

Ausführungsbeispiele der Erfindung werden anhand der Zeichnungen erläutert, in denen darstellen:
- Fig. 1: einen Schnitt durch den Empfangsteil der Sensoreinrichung sowie zwei Filterkurven,
- Fig. 2: einen Schnitt sowie eine Filterkurve für ein zweites Ausführungsbeispiel und
- die Fig. 3 bis 7: entsprechende Darstellungen weiterer Ausführungsbeispiele.

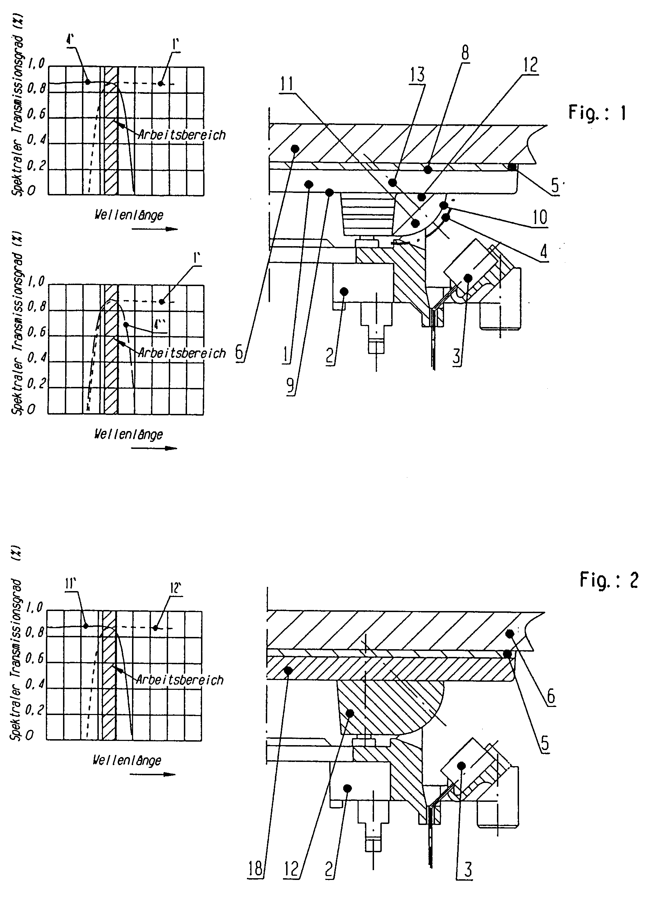

In Fig. 1 ist die Empfangshälfte der Sensoreinrichtung dargestellt, die im Prinzip symmetrisch zu der als Bruchlinie eingezeichneten Mittellinie 7 zu ergänzen ist. Die Sensoreinrichtung umfaßt einen Optikkörper 1, der zwei parallele Grenzflächen 8 und 9 sowie eine nicht dargestellte Eintrittskoppelfläche und eine Austrittkoppelfläche 10 aufweist. Die Austrittskoppelfläche schließt eine Sammellinse 11 ab, so daß ein konvergentes Lichtbündel austritt. Die Sammellinse 11 und ein Ausführungsstück 12 für die Strahlung können einteilig mit dem Optikkörper 1 oder mehrteilig ausgebildet sein. Die Austrittsachse 13 des Lichbündels ist geneigt zu der Grenzfläche 8. Der Neigungswinkel beträgt vorzugsweise 45°. Jedenfalls bildet die Austrittsachse mit der nicht dargestellten Eintrittsachse einen Winkel von 90°.

Der Optikkörper sitzt in einem Sockel 2 für die mechanische Halterung aller Teile. Auf die Austrittsachse 13 ist ein optoelektronischer Empfänger 3, z.B. eine Photodiode, ein Phototransistor oder dergleichen ausgerichtet.

Der Optikkörper 1 ist über ein transparentes Koppelmedium 5 z.B. ein transparentes Klebemittel mit der Kraftfahrzeugscheibe 6 verbunden und optisch gekoppelt. Die Kraftfahrzeugscheibe kann eine Frontscheibe, eine Heckscheibe oder eine andere Scheibe sein.

Das von dem Sender ausgestrahlte Lichtbündel wird innerhalb des Optikkörper totalreflektiert und erreicht längs der Austrittsachse 13 den optoelektronischen Sensor 3. Das Lichtbündel ist schmalbandig und in den Filterkurven jeweils durch den rechteckigen Arbeitsbereich angegeben. Bei Regen tritt eine mehr oder weniger starke Benetzung der Oberfläche der Kraftfahrzeugscheibe auf. Dadurch wird der Reflexionsanteil beeinflußt. Dieses wird durch die Messung erfaßt. Zwar läßt sich durch Modulation des Lichtbündels eine Reduzierung von Störeinflüssen erreichen, doch gerade im sichtbaren Bereich sind die Störeinflüsse durch Tageslicht sehr groß, so daß keine genaue Messung möglich ist.

Die Erfindung sieht daher mindestens zwei Filter 4 vor, die in Fig. 1 andeutungsweise dargestellt sind. Die Filterwirkung wird an den jeweils zugehörigen Filterkurven erläutert.

Die obere Filterkurve zu Fig. 1 zeigt als Arbeitsbereich das linienförmige, schmalbandige Sendelichtbündel. Das Filter 4 als Belag oder Aufdampfung der Austrittskoppelfläche 10 ist ein Bandpaßfilter, dessen Durchlaßkurve 4' angegeben ist. Die Oberkante des Durchlaßbandes schließt mit dem Oberende des Arbeitsbereiches ab. Die Unterkante liegt außerhalb der Darstellung, was im Folgenden nicht jeweils ausdrücklich betont wird. Der Optikkörper 1 ist als zweites Filter benutzt. Durch optisch aktive Zusätze stellt der Optikkörper 1 ein Bandpaßfilter mit der Durchlaßkurve 1' dar. Die Unterkante des Durchlaßbandes der Durchlaßkurve 1' stimmt etwa mit der Unterkante des Arbeitsbreiches überein. Die Durchlaßkurven haben einen Überlappungsbereich, der im wesentlichen mit dem Arbeitsbereich übereinstimmt. Somit wird das Austrittsbündel im wesentlichen auf das Arbeitsband eingeengt. Strahlung außerhalb des Arbeitsbandes wird abgeschirmt. Es ist besonders vorteilhaft, wenn das Durchlaßband in, Bereich von etwa 650 - 750 µm liegt.

In der unteren Filterkurve zu Fig. 1 ist das Filter 4 als Interferenzfilter mit der Filterkurve 4'' ausgebildet. Im übrigen ist die Anordnung unverändert. Man erhält ebenfalls eine Einschränkung des Austrittsbündels auf den Arbeitsbereich.

Bei dem Ausführungsbeispiel der Fig. 2 sind der Optikkörper 18 und das Ausführungsstück 12 mit der Sammellinse 11 zweiteilig ausgebildet. Der Optikkörper 1 wirkt durch optisch aktive Zusätze als Bandpaßfilter mit der Durchlaßkurve 1'. Das Ausführungsstück 12 wirkt ebenfalls als Bandpaßfilter, jedoch mit der Durchlaßkurve 12'.

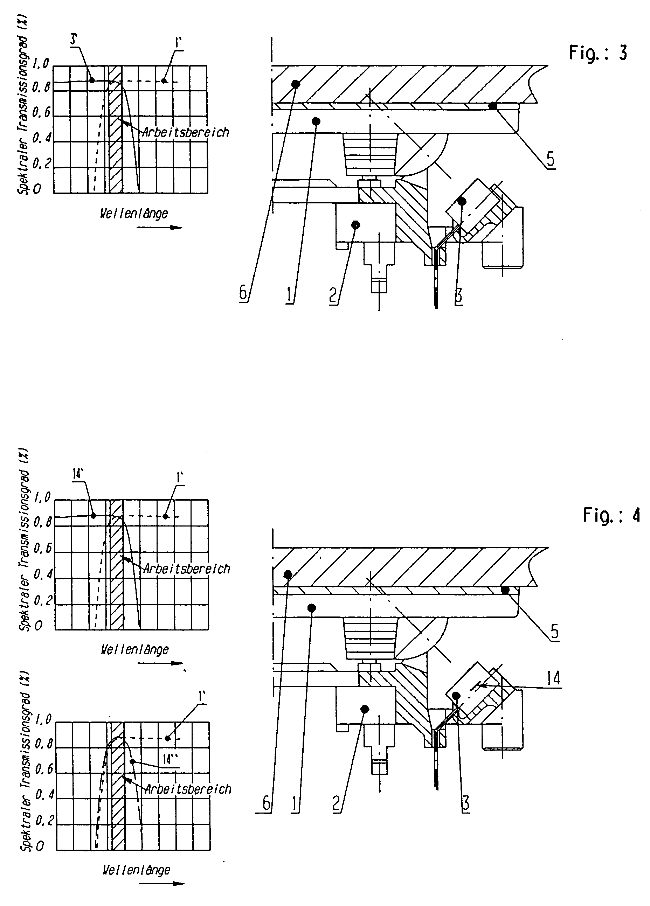

Bei dem Ausführungsbeispiel der Fig. 3 sind der Optikkörper 1 und der Empfänger 3 jeweils als Bandpaßfilter ausgebildet. Die entsprechenden Filterkurven 1' und 3' sind eingezeichnet. Jeweils eine Kante des Durchlaßbereiches liegt auf einer Seite des Arbeitsbereiches, so daß der Überlappungsbereich mit dem Arbeitsbereich übereinstimmt.

Bei dem Ausführungsbeispiel nach Fig. 4 ist der Optikkörper 1 als Bandpaßfilter mit der Filterkurve 1' ausgebildet. Ein mit dem Empfänger 3 kombiniertes Filter 14 ist als Bandpaßfilter mit der Filterkurve 14' oder als Interferenzfilter mit der Filterkurve 14'' ausgebildet.

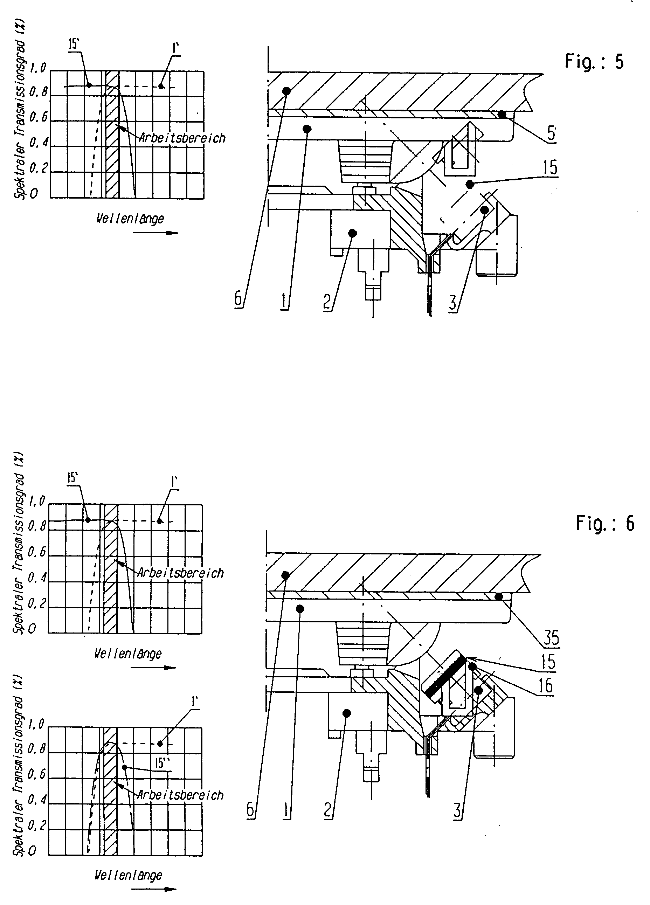

Bei dem Ausführungsbeispiel nach Fig. 5 ist der Optikkörper 1 als Bandpaßfilter mit der Filterkurve 1' ausgebildet. Dem Empfänger 3 ist ein Filter 15 mit der Filterkurve 15' zugeordnet.

Bei dem Ausführungsbeispiel nach Fig. 6 ist ebenfalls der Optikkörper 1 als Bandpaßfilter mit der Filterkurve 1' ausgebildet. Ein Filter 15 ist an einem Halter 16 für den Empfänger 3 vorgesehen. Das Filter 15 kann als Bandpaßfilter mit der Filterkurve 15' oder als Interferenzfilter mit der Filterkurve 15'' ausgebildet sein.

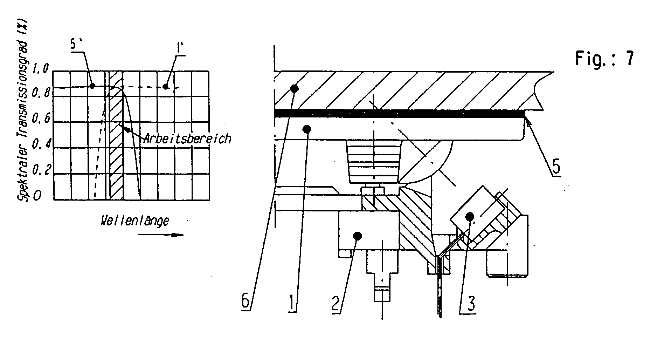

Bei dem Ausführungsbeispiel nach Fig. 7 sind der Optikkörper 1 und das Koppelmedium 5 als Bandpaßfilter jeweils mit der Filterkurve 1' und 5' ausgebildet.

Zusästzlich zu den dargestellten Filterkombinationen sind andere Filterkombinationen anwendbar.

## Patentansprüche

1. Optoelektronische Sensoreinrichtung zur Erfassung des Benetzungsgrades einer transparenten Kraftfahrzeugscheibe (6) mit Niederschlag, wobei ein zwei parallele Grenzflächen (8, 9) und zwei einander gegenüberstehende entgegengesetzt geneigte Koppelflächen (10) aufweisender Optikkörper (1) vorhanden ist, dessen eine Grenzfläche (8) optisch mit der Kraftfahrzeugscheibe (6) gekoppelt ist und dessen Eintrittskoppelfläche (9) mit einem optischen Sender und dessen Austrittskoppelfläche (10) mit einem optischen Empfänger (3) gekoppelt ist, dadurch gekennzeichnet, daß in dem Strahlengang mindestens zwei Filter (4) angeordnet sind, deren Durchlaßbereiche in einem schmalen Frequenzband einen Überlappungsbereich haben.

2. Sensoreinrichtung nach Anspruch 1, dadurch gekennzeichnet, daß der Überlappungsbereich mit dem Arbeitsbereich des optischen Senders übereinstimmt.

3. Sensoreinrichtung nach Anspruch 1 oder 2, dadurch gekennzeichnet, daß der Arbeitsbereich im Spektralbereich von 650 - 750 µm liegt.

4. Sensoreinrichtung nach einem der Ansprüche 1 bis 3, dadurch gekennzeichnet, daß das eine Filter als Interferenzfilter ausgebildet ist, dessen Durchlaßbereich im wesentlichen mit dem Arbeitsbereich übereinstimmt.

5. Sensoreinrichtung nach einem der Ansprüche 1 bis 4, dadurch gekennzeichnet, daß mindestens ein Filter als Bandpaßfilter ausgebildet ist, dessen Durchlaßband den Arbeitsbereich einschließt und mit einer Bandkante unmittelbar in Nachbarschaft des Arbeitsbereichs liegt.

6. Sensoreinrichtung nach Anspruch 5, dadurch gekennzeichnet, daß beide Filter als Bandpaßfilter ausgebildet sind, deren Durchlaßbereiche einerseits an den Arbeitsbereich im langwelligen Bereich und andererseits an den Arbeitsbereich im kurzwelligen Bereich anschließen.

7. Sensoreinrichtung nach Anspruch 1 oder einem der folgenden, dadurch gekennzeichnet, daß das eine Filter durch den Optikkörper realisiert ist.

8. Sensoreinrichtung nach Anspruch 1 oder einem der folgenden, dadurch gekennzeichnet, daß der als Filter dienende Optikkörper eine Mischung von Glasmaterialien unterschiedlicher Eigenschaften ist.

9. Sensoreinrichtung nach Anspruch 1 oder einem der folgenden, dadurch gekennzeichnet, daß ein Filter durch eine dielektrische Schicht realisiert ist, die auf den Optikkörper durch einen Sputterprozeß aufgebracht ist.

10. Sensoreinrichtung nach Anspruch 1 oder einem der folgenden, dadurch gekennzeichnet, daß ein Filter durch die zwischen dem Optikkörper und der Kraftahrzeugscheibe befindliche Klebeschicht realisiert ist.

11. Sensoreinrichtung nach Anspruch 1 oder einem der folgenden, dadurch gekennzeichnet, daß ein Filter durch ein dem optischen Empfänger zugeordnetes, am Halter des Empfängers vorhandenes Zusatzelement realisiert ist.

## Claims

1. Optoelectronic sensor device for recording the degree wetting of a transparent vehicle window (6) in rain, featuring an optical element (1) exhibiting two parallel contact surfaces (8,9) and two interconnecting surfaces (10) set opposite to each other and oppositely inclined, whose one contact surface (2) is optically linked with the vehicle window (6) and whose entry surface (9) is linked with an optical transmitter and whose exit surface (10) is linked with an optical receiver (3), characterised by the fact that at least two filters (4) are arranged in the beam path and their transmission bands overlap in a narrow frequency band.

2. Sensor device according to claim 1 characterised by the fact that the overlapping range matches the operating range of the optical transmitter.

3. Sensor device according to claims 1 or 2, characterised by the fact that the operating range is in the spectral range of 650 - 750 µm.

4. Sensor device according to one of the claims 1 to 3, characterised by the fact that one filter is executed as an interference filter, whose main transmission band matches the operating range.

5. Sensor device according to one of the claims 1 to 4, characterised by the fact that at least one filter is executed as a band-pass filter whose transmission band includes the operating range, with one band edge located directly adjacent to the operating range.

6. Sensor device according to claim 5 characterised by the fact that both filters are arranged as band-pass filters, whose transmission band ranges on the one side adjoin to the operating range in the long-wave range and on the other side to the operating range in the short-wave range.

7. Sensor device according to claim 1 or one of the following, characterised by the fact that the execution of one of the filters is the optical element.

8. Sensor device according to claim 1 or one of the following, characterised by the fact that the optical element serving as filter is a mixture of glass materials having different properties.

9. Sensor device according to claim 1 or one of the following, characterised by the fact that one filter is executed by the application of a dielectric layer to the optical element by sputtering.

10. Sensor device according to claim 1 or one of the following, characterised by the fact that one filter is executed by the adhesive layer between the optical element and the vehicle window.

11. Sensor device according to claim 1 or one of the following, characterised by the fact that one filter is executed by an additional element assigned to the optical receiver and positioned on the receiver support.

## Revendications

1. Dispositif de captage optoélectronique destiné à détecter le degré d'humidification d'une glace transparente (6) d'un véhicule automobile sous l'effet d'une précipitation atmosphérique, lequel dispositif comprend un corps optique (1) qui présente deux surfaces limites parallèles (8, 9) et deux surfaces de couplage (10) se faisant face, inclinées inversement, l'une des surfaces limites (8) étant couplée optiquement à la glace (6) du véhicule automobile et la surface de couplage d'entrée (9) étant couplée avec un émetteur optique tandis que la surface de couplage de sortie (10) est couplée avec un récepteur optique (3),
caractérisé en ce que
deux filtres, au moins, dont les bandes passantes ont une zone de recouvrement dans une bande de fréquence étroite, sont disposés dans le trajet des rayons.

2. Dispositif de captage selon la revendication 1'
caractérisé en ce que
la zone de recouvrement concorde avec la zone de travail de l'émetteur optique.

3. Dispositif de captage selon la revendication 1 ou 2,
caractérisé en ce que
la zone de travail est situé dans un domaine spectral de 650 à 750 m.

4. Dispositif de captage selon l'une des revendications 1 à 3,
caractérisé en ce que
l'un des filtres est conçu sous forme de filtre d'interférence donc la bande passante concorde sensiblement avec la zone de travail.

5. Dispositif de captage selon l'une des revendications 1 à 4,
caractérisé en ce que
un filtre, au moins, est conçu sous forme de filtre passe-bande dont la bande passante inclue la zone de travail et dont un bord de bande est situé à proximité directe de la zone de travail.

6. Dispositif de captage selon la revendication 5,
caractérisé en ce que
les deux filtres sont conçus sous forme de filtres passe-bande dont la bande passante se raccorde, d'une part, à la zone de travail dans le domaine grandes ondes et, d'autre part, à la zone de travail dans le domaine ondes courtes.

7. Dispositif de captage selon la revendication 1 ou l'une des suivantes,
caractérisé en ce que
l'un des filtres est réalisé par le corps optique.

8. Dispositif de captage selon la revendication 1 ou l'une des suivantes,
caractérisé en ce que
le corps optique servant de filtre est un mélange de verres qui possèdent des propriétés différentes.

9. Dispositif de captage selon la revendication 1 ou l'une des suivantes,
caractérisé en ce que
l'un des filtres est réalisé par une couche diélectrique, appliqué par pulvérisation sur le corps optique.

10. Dispositif de captage selon la revendication 1 ou l'une des suivantes,
caractérisé en ce que
l'un des filtres est réalisé par une couche adhésive, appliquée entre le corps optique et la glace du véhicule automobile.

11. Dispositif de captage selon la revendication 1 ou l'une des suivantes,
caractérisé en ce que
l'un des filtres est réalisé par un élément supplémentaire, prévu sur le support du récepteur et subordonné au récepteur optique.
